# EUROPEAN PATENT SPECIFICATION

(11) **EP 4 024 129 B1**
(45) Date of publication and mention of the grant of the patent: **06.05.2026**
(21) Application number: 19943458.0
(22) Date of filing: 30.08.2019
(51) Int. Cl.: G03B 17/54, G01B 11/02, G06Q 50/08, G06T 7/60, G06V 10/46

(54) **BUILDING MATERIAL IMAGE RECOGNITION AND ANALYSIS SYSTEM AND METHOD**
SYSTEM UND VERFAHREN ZUR BAUMATERIALBILDERKENNUNG UND -ANALYSE
SYSTÈME ET PROCÉDÉ DE RECONNAISSANCE ET D'ANALYSE D'IMAGE DE MATÉRIAU DE CONSTRUCTION

(43) Date of publication of application: 06.07.2022
(73) Proprietor: Taroko Door & Window Technologies, Inc., Gaoxiong City, Taiwan 83160 (TW)
(72) Inventor: LIN, Dinghui, Taiwan 83160 (CN)
(74) Representative: Tahtadjiev, Konstantin
(86) International application number: PCT/CN2019/103555
(87) International publication number: WO 2021/035660

(56) References cited:
- WO-A1-2016/049536
- WO-A1-2019/114219
- CN-A- 101 676 683
- CN-A- 101 770 145
- CN-A- 101 770 145
- CN-A- 103 424 076
- DE-A1- 102008 002 241
- US-A1- 2015 369 593
- US-A1- 2017 091 879
- US-A1- 2018 108 136
- US-A1- 2018 293 751

## Description

### FIELD OF INVENTION

The present disclosure is an image recognition technology, and in particular, is a building material image recognition and analysis system and a method thereof.

### BACKGROUND OF INVENTION

Currently, before making building materials, it is necessary to obtain the space dimensions of the place where the building materials will be installed, and then make the matching building materials according to the aforementioned space dimensions. However, at present, the way to obtain the space dimensions of the building materials is to measure them in person at the installation site. When the installation site is far away, the costs of transportation and labor will be incurred due to the manual measurement method, thereby causing the cost of installation to stay high.

Therefore, in order to overcome the above-mentioned problems, the invention patent No. I509213 of Taiwan, discloses a "method for acquiring a space size of door (window) installation using remote image", which mainly uses a size correction piece disposed on one side of the edge of a building material installation space, then acquire an image including the door (window) installation space and the size correction piece through an image capturing device, and then transmits the image to an image measurement system. The image measurement system is used to analyze the image to find out an image proportion relationship between the door (window) installation space and the size correction piece. An actual size of the door (window) installation space is calculated according to the image proportion relationship and an actual size of the size correction piece; however, this conventional technology still has the following drawbacks in use:
1. This conventional technology requires the placement of a size correction piece before acquiring an image. However, it has been found that it is often difficult to find a suitable size correction piece during measurement, thereby causing a bother to the measurement.
2. This conventional technology cannot recognize the color of the building materials in the image, thereby causing the problem that the colors of the building materials produced are usually different.
3. In addition, only the installation location is noted during photographing in the conventional technology, so there is often accompanied with a bother of the wrong installation location.

In addition, The patent application WO 2019/114219 A1 discloses a mobile robot and control method and control system thereof, comprising: storage device 11 for storing location information, map information, control application, camera device 13 for getting environment image when mobile robot is moving, treatment unit 15 for executing the instructions in the storage device 11 to controlling the mobile robot, mobile system 17 connected with the treatment unit 15, wherein the mobile system 17 comprises traveling mechanism and driving mechanism. The patent discloses a mobile robot and control method and control system, the purpose of the the patent is to discloses a mobile robot and control method and control system for improving the mobile robot's detection accuracy of obstacles, the obstacle is flexible winding.

The patent application DE 10 2008 002241 A1 discloses a method for image-based measurement of a room or a partial area of a room, the patent discloses a method for measuring room area.

The patent application US 2018/293751 A1 discloses a measuring apparatus and corresponding measuring method, the patent discloses a measuring method: step 100 ,switching on the measuring apparatus 1, step 101, a sequence of images of the examination object 3 is then recorded by the measuring apparatus 1, step 102, robust features 9, step 103,by use of the robust features 9 extracted in step 102, in particular using descriptors for the robust features 9, corresponding image regions 11 among the images are then identified in a computer-aided manner and a 3D model, step 104, from the sequence of images recorded in step 101, precise features 13, step 105,the precise features are assigned among the images and their 3D coordinates are calculated, step 106, a set of precise features 13 is then selected from the precise features 13 detected in step 104, step 107, finally, the desired geometric variable h is calculated in a computer- aided manner in the 3D model from the set of precise features 13 that was selected in step 106, step 108, the method is ended, a further method step can be performed, in which the 3D model is scaled by a reference object and/or a distance measurement.

The patent application WO 201 6/049536 A1 discloses a system and method for determining coating requirements, in the patent "Determine orientations of image files 48--Determine coordinate locations of pixels 50-Identify coatable surfaces and associated dimensions 52--Receive real-world coordinate data 54--Calculate real-world dimensions 56--Calculate surface areas 58". The patent actually discloses a method for determining coating requirements.

The patent application US 2017/091879 A1 discloses a media management system, the patent discloses the media management system may recognize a door in an image, the patent discloses using information on dimensions of recognized objects and a derived scale for an image, the system may derive dimensions of other items in an image.

The patent application US 2015/369593 A1 discloses a orthographic image capture, in the patent, "Trigger active illumination pattern projection 402--Capture image containing active illumination and desired scene 404--Filter image to extract active illumination from the background scene 406--Determine camera position and scene geometry from the distorted active illumination pattern 408--Calculate a transformation matrix to modify the geometry of the captured image into the desired orthographic image 410--Apply the transformation 412--Orthographic image of the scene 414--User selects key points interactively using mouse, touch screen, or other pointing method 416--Dimensions, areas, angles, and other requested information is extracted from the orthographic image and displayed to the user 418". the patent discloses a method for image capture.

### SUMMARY OF INVENTION

The technical solution used in the present disclosure is a building material image recognition and analysis method according to claim 1.

A building material image recognition and analysis system is provided according to claim 8.

The beneficial effect of the present disclosure is that the main purpose of the present disclosure is to provide a way to obtain the installation space of the building material can be obtained without a size correction piece.

According to the purpose mentioned above, the present disclosure provides a building material image recognition and analysis system comprising a photographing unit for photographing a building material to acquire a building material image; an image recognition unit for receiving the building material image, obtaining, according to at least one image feature in the building material image, an actual size of the image feature, and obtaining a proportion of the image feature to the building material in the building material image and calculating an actual size of the building material according to the proportion and the actual size of the image feature. As a result, during the process of obtaining the actual size of the building material, the installation space of the building material can be obtained without a size correction piece.

According to the purpose mentioned above, the present disclosure provides a building material image recognition and analysis method comprising steps of acquiring a building material image, recognizing at least one image feature in the building material image, obtaining an actual size of the image feature, and obtaining a proportion of the image feature to a building material in the building material image and calculating an actual size of the building material according to the proportion and the actual size of the image feature.

Another purpose of the present disclosure is to further understand the correct color code of the building material, mainly by adding a color identification module into the image recognition unit. The color identification module can identify the color of the building material in the building material image together with or before or after the image recognition unit recognizes the building material features, and then compare it with a standard color code stored in a building material database, so as to provide the correct color code data of the building material, and thus avoid making the building material with different colors.

Another main purpose of the present disclosure is to provide a positioning coordinate value of an installation space of the building material, so that the location where the building material is installed can be accurately obtained and the probability of mis-installation of doors and windows can be reduced.

### DESCRIPTION OF DRAWINGS

FIG. 1 is the first one of schematic diagrams of the system of the present disclosure.
FIG. 2 is the second one of schematic diagrams of the system of the present disclosure.
FIG. 3 is a schematic flowchart of the method of the present disclosure.

### DETAILED DESCRIPTION OF PREFERRED EMBODIMENTS

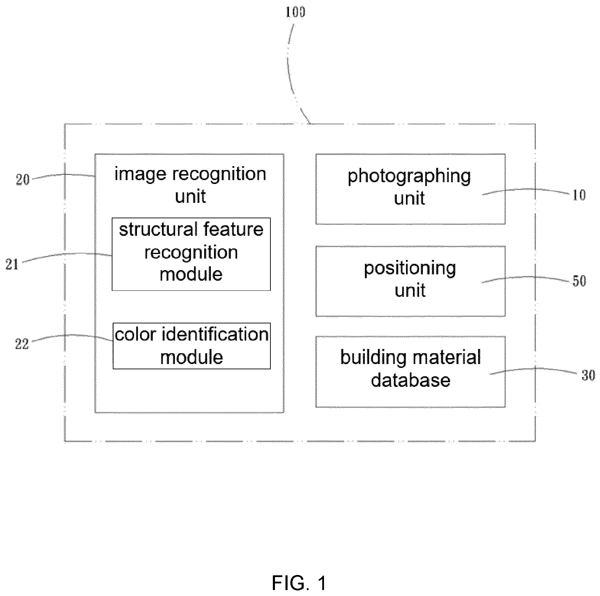

Please refer to FIG. 1. It is a preferred embodiment of a building material image recognition and analysis system of the present disclosure. It mainly includes a photographing unit 10, an image recognition unit 20, and a positioning unit 50. The photographing unit 10 is used for photographing a building material to acquire a building material image. The image recognition unit 20 receives the building material image, recognizes at least an image feature in the building material image, and obtains an actual size of the image feature according to the image feature.

In this embodiment, the image recognition unit 20 is provided with a structural feature recognition module 21. The structural feature recognition module 21 is used for recognizing the features of the exterior or structure of the building material in the image feature, and the image feature obtained by the aforementioned recognition can be compared with the data stored in a building material database 30 to acquire the actual size of the image feature, obtain a proportion of the image feature to the building material in the building material image, and calculate an actual size of the building material according to the proportion and the actual size of the image feature. Under this circumstance, during the process of obtaining the actual size of the building material, the installation space of the building material can be obtained without a size correction piece.

Furthermore, in this embodiment, the building material database 30 stores the structural features and sizes of each building material model in the domestic and foreign building materials industry, and the building materials include masonry, glass, tiles, windows, doors, and building plates, etc., and not limited to the foregoing. The windows and doors include the structural features and sizes thereof of the outer frame, the inner leaf, the cover, and the latch, etc., and the sizes of the inner leaf at least have the width of a vertical frame of the inner leaf, the recess feature on the vertical frame of the inner leaf, and the height of a horizontal frame of the inner leaf, etc. In addition, a standard color code is built into the building material database 30, and a color identification module 22 is further provided in the image recognition unit 20. The color identification module 22 can recognize the color of the building material in the building material image together with or before or after the image recognition unit 20 recognizes the building material image, and then compare with the standard color code stored in the building material database 30, so as to provide the correct color code of the building material, and thus avoid making the building material with different colors. In this embodiment, the color identification module 22 may be a color identification software, but not limited to the foregoing.

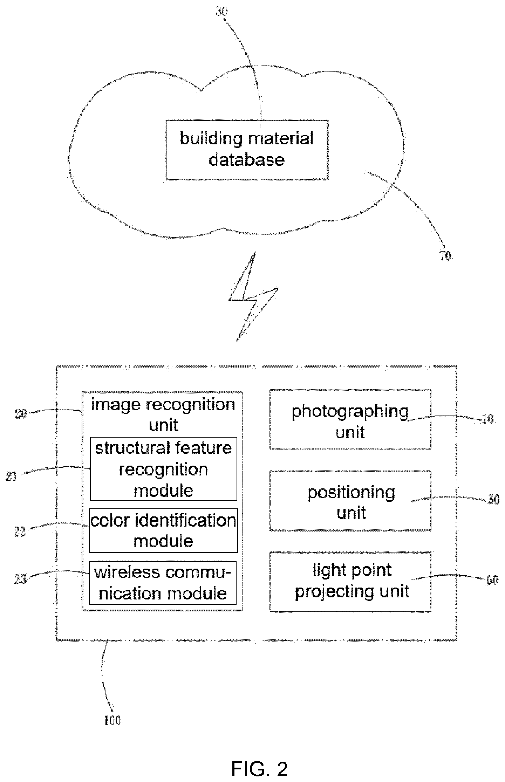

Please refer to FIG. 2. The image recognition unit 20 is further provided with a wireless communication module 23, and the building material database 30 is disposed in a cloud 70, so that the image recognition unit 20 can acquire data in the building material database 30 in the cloud 70 through the wireless communication module 23. In addition, the wireless communication module 23 can electrically connect with a positioning unit 50. The positioning unit 50 can provide positioning coordinate values of the building material together with or before or after recognizing the building material image so as to obtain a correct position where the building material is installed. For example, the position where the building material is installed is a certain room, a certain floor, and a certain building, etc., thereby reducing the probability of future mis-installation. The positioning unit 50 is a Bluetooth positioning, a GPS positioning, a Wi-Fi positioning, a RFID positioning, an infrared/laser positioning, a Zigbee positioning or a VWB positioning, but not limited to the foregoing. Any positioning unit capable of providing a positioning coordinate value is encompassed in the application scope of the present disclosure.

Please refer to FIG. 2 again. The present embodiment further includes a light point projecting unit 60. The light point projecting unit 60 is able to project a plurality of light points to the building material to make the building material image acquired by the photographing unit 10 include the plurality of light points and make the image recognition unit 20 be able to choose the plurality of light points in the building material image as the image feature for recognition to obtain the actual size of the image feature mentioned above. Then, a proportion of the image feature to a building material in the building material image is obtained, and an actual size of the building material is calculated according to the proportion and the actual size of the image feature. In this embodiment, the light point projecting unit 60 is a LIDAR (Light Detection and Ranging), a laser measurement instrument, a multi-lens sensing module, a structured light sensing module, a 3D sensing module or a TOF sensing module, but not limited to the foregoing. Any apparatus or module capable of projecting light points is encompassed in the application scope of the present disclosure.

Please refer to FIG. 1 and FIG. 2 again. In the present embodiment, the photographing unit 10, the image recognition unit 20, the building material database 30, the positioning unit 50, and the light point projecting unit 60 can be assembled in a handheld device 100. The handheld device 100 includes a camera, a smartphone with a camera, a smart watch with a camera, a portable computer, and a tablet computer, etc., but not limited to the foregoing.

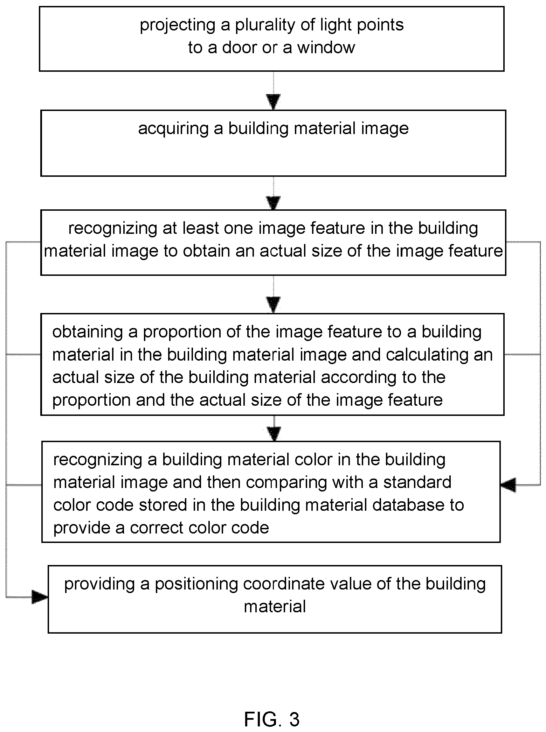

Please refer to FIG. 3. According to the system mentioned above, the flow of the method of the present disclosure includes steps of acquiring a building material image, recognizing at least one image feature in the building material image, obtaining an actual size of the image feature, and obtaining a proportion of the image feature to a building material in the building material image and calculating an actual size of the building material according to the proportion and the actual size of the image feature. As a result, during the process of obtaining the actual size of the building material, the installation space of the building material can be obtained without a size correction piece.

Please refer to FIG. 3 again. Before acquiring the building material image, a plurality of light points can be projected to a building material to make the building material image contain the plurality of light points. The plurality of light points in the building material image are used as the image feature for recognizing to obtain the actual size of the image feature, and under the condition that the proportion of the image feature to a building material in the building material image is obtained, the actual size of the building material can be calculated according to the actual size of the image feature and the proportion, and the plurality of light points mentioned above are projected by a LIDAR, a laser measurement instrument, a multi-lens sensing module, a structured light sensing module, a 3D sensing module or a TOF sensing module. Any apparatus or module capable of projecting light points is encompassed in the application scope of the present disclosure.

After the building material image is acquired, the image feature is recognized with building material data in the building material database 30 to obtain the actual size of the image feature. The building material database 30 stores the structural features and sizes of each building material model in the domestic and foreign building materials industry, and the building materials include masonry, glass, tiles, windows, doors, and building plates, etc., and not limited to the foregoing. The windows and doors include, for example, the structural features and sizes thereof of the outer frame, the inner leaf, the cover, and the latch, etc., and the sizes of the inner leaf at least have the width of a vertical frame of the inner leaf, the recess feature on the vertical frame of the inner leaf, and the height of a horizontal frame of the inner leaf, etc.

Furthermore, during the recognition process of the method of the present disclosure, a building material color of the building material in the building material image is recognized and then be compared with a standard color code stored in the building material database 30 for providing the correct color code. The method of the present disclosure can also provide a positioning coordinate value of the installation space of the building material to obtain the correction position where the building material is installed for reducing the probability of future mis-installation. The positioning coordinate value is provided and obtained by a Bluetooth positioning, a GPS positioning, a Wi-Fi positioning, a RFID positioning, an infrared/laser positioning, a Zigbee positioning or a VWB positioning, but not limited to the foregoing. Any positioning technology capable of providing a positioning coordinate value is encompassed in the application scope of the present disclosure.

From the above discussion, the present disclosure has the same beneficial effects of saving the cost of manual measurement as the conventional technology. The present disclosure can overcome the troubles of the conventional technology without a need of a size correction piece in the process of obtaining the installation space of the building material. At the same time, the present disclosure adds a color identification module and a positioning unit which can not only provide the correct color code data of the building material to avoid the production of building materials with different colors, but also accurately obtain the location where the building materials are installed, thereby having multiple advantages such as reducing mis-installation.

The scope of protection of the present disclosure is subject to the scope defined by the claims. Any changes and modifications made by those of ordinarily skilled in the art without departing from the scope of the present disclosure as defined by the appended claims are encompassed in the application scope of the present disclosure.

## Claims

1. A building material image recognition and analysis method, comprising a photographing unit (10) for acquiring a building material image, a structural feature recognition module (21) for recognizing at least one feature on the building material structure in the building material image, the feature on the building material structure is further compared with the building material structure stored in a building material database (30) for obtaining an actual size of the image feature, and obtaining a proportion of the feature on the building material structure to a building material in the building material image and calculating an actual size of the building material according to the proportion and the actual size of the image feature, wherein the building material image is further processed through a color recognition module (22) to recognize the color of the building material in the building material image.

2. The building material image recognition and analysis method according to claim 1, wherein a color of the building material in the building material image is recognized for providing a correct color code of the building material.

3. The building material image recognition and analysis method according to claim 1 further comprising a step of providing a building material positioning coordinate value.

4. The building material image recognition and analysis method according to claim 3, wherein the building material positioning coordinate value is provided by a Bluetooth positioning, a GPS positioning, a Wi-Fi positioning, a RFID positioning, an infrared/laser positioning, a Zigbee positioning or a VWB positioning.

5. The building material image recognition and analysis method according to claim 1 comprising a step, before acquiring the building material image, of projecting a plurality of light points to the building material to make the building material image comprise the plurality of light points.

6. The building material image recognition and analysis method according to claim 5, wherein the plurality of light points are projected by a LIDAR, a laser measurement instrument, a multi-lens sensing module, a structured light sensing module, a 3D sensing module or a TOF sensing module.

7. The building material image recognition and analysis method according to claim 5, wherein the plurality of light points are used as the image feature for recognizing to obtain the actual size of the image feature.

8. A building material image recognition and analysis system, comprising a photographing unit (10) for photographing a building material for acquiring a building material image; and an image recognition unit (20), wherein the image recognition unit (20) is used for receiving the building material image, the image recognition unit (20) is provided with a structural feature recognition module (21) for recognizing at least one feature on the building material structure in the building material image, wherein the feature on the building material structure is further compared with the building material structure stored in a building material database (30), obtaining, according to at least one image feature in the building material image, an actual size of the image feature, and obtaining a proportion of the feature on the building material structure to the building material in the building material image and calculating an actual size of the building material according to the proportion and the actual size of the image feature, wherein the image recognition unit (20) further comprises a color recognition module (22) for recognizing the color of the building material in the building material image.

9. The building material image recognition and analysis system according to claim 8, wherein the image recognition unit (20) is able to recognize a color of the building material in the building material image to provide a correct color code of the building material.

10. The building material image recognition and analysis system according to claim 8 further comprising a light point projecting unit (60), wherein the light point projecting unit (60) is able to project a plurality of light points to the building material to make the building material image acquired by the photographing unit (10) comprise the plurality of light points.

11. The building material image recognition and analysis system according to claim 10, wherein the light point projecting unit (60) is a LIDAR, a laser measurement instrument, a multi-lens sensing module, a structured light sensing module, a 3D sensing module or a TOF sensing module.

12. The building material image recognition and analysis system according to claim 8 further comprising a positioning unit (50), wherein the positioning unit (50) is able to provide a building material positioning coordinate value.

## Patentansprüche

1. Verfahren zur Bilderkennung und -analyse von Baumaterialien, umfassend eine Fotoeinheit (10) zur Aufnahme eines Bildes eines Baumaterials, ein Strukturmerkmalserkennungsmodul (21) zur Erkennung mindestens eines Merkmals der Baumaterialstruktur im Bild, wobei das Merkmal mit der in einer Baumaterialdatenbank (30) gespeicherten Baumaterialstruktur verglichen wird, um die tatsächliche Größe des Merkmals zu ermitteln, und das Verhältnis des Merkmals zum Baumaterial im Bild ermittelt wird, um die tatsächliche Größe des Baumaterials anhand dieses Verhältnisses und der tatsächlichen Größe des Merkmals zu berechnen, wobei das Bild des Baumaterials anschließend durch ein Farberkennungsmodul (22) verarbeitet wird, um die Farbe des Baumaterials im Bild zu erkennen.

2. Verfahren zur Bilderkennung und -analyse von Baumaterialien nach Anspruch 1, wobei die Farbe des Baumaterials im Bild erkannt wird, um einen korrekten Farbcode des Baumaterials bereitzustellen.

3. Verfahren zur Bilderkennung und -analyse von Baumaterialien nach Anspruch 1, ferner umfassend einen Schritt zur Bereitstellung eines Positionskoordinatenwerts des Baumaterials.

4. Das Verfahren zur Bilderkennung und -analyse von Baumaterialien nach Anspruch 3, wobei die Positionskoordinaten des Baumaterials mittels Bluetooth-, GPS-, WLAN-, RFID-, Infrarot-/Laser-, ZigBee- oder VWB-Positionierung ermittelt werden.

5. Das Verfahren zur Bilderkennung und -analyse von Baumaterialien nach Anspruch 1, umfassend einen Schritt vor der Bildaufnahme des Baumaterials, bei dem mehrere Lichtpunkte auf das Baumaterial projiziert werden, sodass das Bild des Baumaterials diese Lichtpunkte enthält.

6. Das Verfahren zur Bilderkennung und -analyse von Baumaterialien nach Anspruch 5, wobei die mehreren Lichtpunkte mittels LIDAR, Lasermessgerät, Mehrlinsen-Sensormodul, Strukturlicht-Sensormodul, 3D-Sensormodul oder TOF-Sensormodul projiziert werden.

7. Das Verfahren zur Bilderkennung und -analyse von Baumaterialien nach Anspruch 5, wobei die mehreren Lichtpunkte als Bildmerkmale zur Erkennung und Bestimmung der tatsächlichen Größe der Bildmerkmale verwendet werden.

8. Ein System zur Bilderkennung und -analyse von Baumaterialien, bestehend aus einer Fotoeinheit (10) zum Fotografieren eines Baumaterials und zur Erfassung eines Bildes des Baumaterials; und einer Bilderkennungseinheit (20), wobei die Bilderkennungseinheit (20) zum Empfangen des Bildes des Baumaterials dient und mit einem Strukturmerkmalserkennungsmodul (21) ausgestattet ist, das mindestens ein Merkmal der Baumaterialstruktur im Bild erkennt, dieses Merkmal wird anschließend mit der in einer Baumaterialdatenbank (30) gespeicherten Baumaterialstruktur verglichen, aus diesem Merkmal wird die tatsächliche Größe des Bildmerkmals ermittelt, sein Verhältnis zum Baumaterial im Bild bestimmt und daraus die tatsächliche Größe des Baumaterials berechnet, die Bilderkennungseinheit (20) umfasst ferner ein Farberkennungsmodul (22) zur Farberkennung des Baumaterials im Bild.

9. Das Bilderkennungs- und Analysesystem für Baumaterialien nach Anspruch 8, wobei die Bilderkennungseinheit (20) die Farbe des Baumaterials im Bild erkennen und den korrekten Farbcode des Baumaterials angeben kann.

10. Das Bilderkennungs- und Analysesystem für Baumaterialien nach Anspruch 8, ferner umfassend eine Lichtpunktprojektionseinheit (60), die mehrere Lichtpunkte auf das Baumaterial projiziert, sodass das von der Fotoeinheit (10) aufgenommene Bild des Baumaterials diese Lichtpunkte enthält.

11. Das Bilderkennungs- und Analysesystem für Baumaterialien nach Anspruch 10, wobei die Lichtpunktprojektionseinheit (60) ein LIDAR, ein Lasermessgerät, ein Mehrlinsen-Sensormodul, ein Strukturlicht-Sensormodul, ein 3D-Sensormodul oder ein TOF-Sensormodul ist.

12. Das Bilderkennungs- und Analysesystem für Baumaterialien nach Anspruch 8, ferner umfassend eine Positionierungseinheit (50), wobei die Positionierungseinheit (50) in der Lage ist, einen Positionskoordinatenwert für das Baumaterial bereitzustellen.

## Revendications

1. Procédé de reconnaissance et d'analyse d'images de matériaux de construction, comprenant une unité de prise de vue (10) pour l'acquisition d'une image du matériau de construction, un module de reconnaissance de caractéristiques structurelles (21) pour la reconnaissance d'au moins une caractéristique de la structure du matériau de construction dans l'image, la comparaison de cette caractéristique avec la structure du matériau de construction stockée dans une base de données de matériaux de construction (30) afin d'obtenir sa taille réelle, et le calcul du rapport entre la caractéristique et le matériau de construction dans l'image, puis le calcul de la taille réelle du matériau à partir de ce rapport et de la taille réelle de la caractéristique, l'image du matériau de construction est ensuite traitée par un module de reconnaissance des couleurs (22) pour identifier la couleur du matériau.

2. Procédé de reconnaissance et d'analyse d'images de matériaux de construction selon la revendication 1, dans lequel la couleur du matériau de construction dans l'image est reconnue afin de fournir un code couleur correct.

3. Procédé de reconnaissance et d'analyse d'images de matériaux de construction selon la revendication 1, comprenant en outre une étape d'attribution des coordonnées de positionnement du matériau.

4. Procédé de reconnaissance et d'analyse d'images de matériaux de construction selon la revendication 3, dans lequel les coordonnées de positionnement du matériau sont fournies par un système de positionnement Bluetooth, GPS, Wi-Fi, RFID, infrarouge/laser, Zigbee ou VWB.

5. Procédé de reconnaissance et d'analyse d'images de matériaux de construction selon la revendication 1, comprenant une étape, avant l'acquisition de l'image, de projection d'une pluralité de points lumineux sur le matériau afin que l'image soit composée de ces points.

6. Procédé de reconnaissance et d'analyse d'images de matériaux de construction selon la revendication 5, dans lequel les points lumineux sont projetés par un LIDAR, un instrument de mesure laser, un module de détection multilentille, un module de détection à lumière structurée, un module de détection 3D ou un module de détection TOF.

7. Procédé de reconnaissance et d'analyse d'images de matériaux de construction selon la revendication 5, dans lequel les points lumineux servent de caractéristique d'image pour la reconnaissance, permettant d'obtenir la taille réelle de cette caractéristique.

8. Un système de reconnaissance et d'analyse d'images de matériaux de construction, comprenant une unité de prise de vue (10) pour photographier un matériau de construction et acquérir une image de celui-ci ; et une unité de reconnaissance d'images (20), cette dernière, utilisée pour recevoir l'image du matériau de construction, est dotée d'un module de reconnaissance de caractéristiques structurelles (21) permettant de reconnaître au moins une caractéristique de la structure du matériau dans l'image, cette caractéristique est ensuite comparée à la structure du matériau stockée dans une base de données de matériaux de construction (30), a partir de cette caractéristique, on obtient la taille réelle de la caractéristique, ainsi que son rapport par rapport à la taille réelle du matériau dans l'image, la taille réelle du matériau est ensuite calculée à partir de ce rapport et de la taille réelle de la caractéristique, l'unité de reconnaissance d'images (20) comprend également un module de reconnaissance des couleurs (22) pour identifier la couleur du matériau de construction dans l'image.

9. Système de reconnaissance et d'analyse d'images de matériaux de construction selon la revendication 8, dans lequel l'unité de reconnaissance d'images (20) est capable de reconnaître la couleur du matériau de construction dans l'image de ce matériau afin de fournir un code couleur correct.

10. Système de reconnaissance et d'analyse d'images de matériaux de construction selon la revendication 8, comprenant en outre une unité de projection de points lumineux (60), laquelle est capable de projeter une pluralité de points lumineux sur le matériau de construction afin que l'image de ce dernier, acquise par l'unité de prise de vue (10), comprenne ces points lumineux.

11. Système de reconnaissance et d'analyse d'images de matériaux de construction selon la revendication 10, dans lequel l'unité de projection de points lumineux (60) est un LIDAR, un instrument de mesure laser, un module de détection multilentille, un module de détection à lumière structurée, un module de détection 3D ou un module de détection TOF.

12. Le système de reconnaissance et d'analyse d'images de matériaux de construction selon la revendication 8 comprend en outre une unité de positionnement (50), dans laquelle l'unité de positionnement (50) est capable de fournir une valeur de coordonnées de positionnement du matériau de construction.
